# EUROPEAN PATENT APPLICATION

(11) **EP 3 587 640 A1**
(43) Date of publication of application: **01.01.2020**
(21) Application number: 19181086.0
(22) Date of filing: 19.06.2019
(51) Int. Cl.: D03J 1/00, G06T 7/00

(54) **METHOD OF STOP-MARK INSPECTION FOR LOOM AND STOP-MARK INSPECTION APPARATUS FOR LOOM**

(30) Priority: 28.06.2018 JP 2018122784
(71) Applicant: Kabushiki Kaisha Toyota Jidoshokki, Kariya-shi, Aichi 448-8671 (JP)
(72) Inventor: SUZUKI, Akihiro, Kariya-shi, Aichi 448-8671 (JP); MATSUI, Tadasumi, Kariya-shi, Aichi 448-8671 (JP); TSUJI, Ryohei, Kariya-shi, Aichi 448-8671 (JP)
(74) Representative: TBK

(57) **Abstract**

A method of a stop-mark inspection for a loom (10) includes photographing a woven fabric (W) in such a manner that a photographing area contains a weaving-resuming weft thread (Ys) that is a thread of the weft (Y) of the woven fabric (W) inserted when weaving is resumed after a stop in operation of the loom (10), computing a normal pitch (P) between threads of the weft (Y) in a first image zone (E1, E3) that is spaced from the weaving-resuming weft thread (Ys) by a pre-determined length (L) in a direction to a woven fabric take-up side in a photographed image (S, S1 to S30) of the woven fabric (W), and determining presence or absence of a stop mark in the woven fabric (W) by comparing a pitch (Pt) between threads of the weft (Y) in a second image zone (E2, E4) that contains the weaving-resuming weft thread (Ys) with the normal pitch (P) between the threads of the weft (Y).

## Description

### BACKGROUND ART

The present disclosure relates to a method of a stop-mark inspection for a loom and a stop-mark inspection apparatus for a loom.

A loom in weaving fabric may stop its operation by some cause. When the loom stops its operation, a failure called a stop mark may be formed in a woven fabric in weaving. To prevent the stop mark from being formed in the woven fabric, an inspection for the stop mark in the fabric is required. Japanese Patent Application Publication No. 2004-131867 discloses a method of a stop-mark inspection for a loom to inspect for the stop mark by photographing the stop mark, and a stop-mark inspection apparatus for the loom including a camera to photograph the stop mark. In the method of the stop-mark inspection for the loom according to the above Publication, the stop mark is inspected by photographing the woven fabric based on the pre-set normal pitch between threads, or the normal number of picks per inch, of the weft.

The method of the stop-mark inspection for the loom according to the above Publication, however, has a difficulty in assuring a high accuracy in the inspection for the stop mark. One reason for this problem is that the normal pitch between the threads of the weft in an actual woven fabric may depart from the pre-set normal pitch between the threads of the weft. For example, even when the normal pitch is pre-set to 50 picks per inch for the loom, the normal pitch in an actual woven fabric may result in 49.5 picks per inch. If departure of the normal pitch in the actual woven fabric from the pre-set normal pitch is larger than a difference (threshold) between the pre-set normal pitch and the pitch of the stop mark, the presence and the absence of the stop mark may not be inspected accurately. Another reason for this problem is that a dimensional error may occur between the actual photographing area and the pre-set photographing area. To inspect for the stop mark, an image analysis is performed including a process to convert dimensions of the photographing area into pixels. However, if a dimensional error occurs between the actual photographing area and the pre-set photographing area, the accuracy in inspecting for the stop mark deteriorates because the photographing area used for conversion has the dimensional error.

A different method of the stop-mark inspection for the loom from the method using the pre-set normal pitch for the loom may be considered, that is, a method in which the normal pitch between threads of the weft is determined by photographing the actual woven fabric and then the determined normal pitch is used for inspecting for the stop mark. In this method, however, photographing is required twice: one for determining the normal pitch and the other for inspecting for the stop mark. This increases the frequency of photographing.

The present disclosure has been made in view of the above circumstances and is directed to providing a method of a stop-mark inspection for a loom and a stop-mark inspection apparatus for a loom which allow calculating a normal pitch between threads of the weft with one-time photographing and assuring a high accuracy in inspection for a stop mark.

### SUMMARY

In accordance with an aspect of the present disclosure, there is provided a method of a stop-mark inspection for a loom and a stop-mark inspection apparatus for a loom.

The method of the stop-mark inspection for the loom includes photographing a woven fabric in such a manner that a photographing area contains a weaving-resuming weft thread that is a thread of the weft of the woven fabric inserted when weaving is resumed after a stop in operation of the loom, computing a normal pitch between threads of the weft in a first image zone that is spaced from the weaving-resuming weft thread by a pre-determined length in a direction to a woven fabric take-up side in a photographed image of the woven fabric, and determining presence or absence of a stop mark in the woven fabric by comparing a pitch between threads of the weft in a second image zone that contains the weaving-resuming weft thread with the normal pitch between the threads of the weft.

The stop-mark inspection apparatus for the loom includes a camera photographing a woven fabric in such a manner that a photographing area contains a weaving-resuming weft thread that is a thread of the weft of the woven fabric inserted when weaving is resumed after a stop in operation of the loom, a computing device computing a normal pitch between threads of the weft in a first image zone that is spaced from the weaving-resuming weft thread by a pre-determined length in a direction to a woven fabric take-up side in a photographed image of the woven fabric, and a judging device determining presence or absence of a stop mark in the woven fabric by comparing a pitch between threads of the weft in a second image zone that contains the weaving-resuming weft thread with the normal pitch between the threads of the weft.

Other aspects and advantages of the disclosure will become apparent from the following description, taken in conjunction with the accompanying drawings, illustrating by way of example the principle of the disclosure.

### BRIEF DESCRIPTION OF THE DRAWINGS

The disclosure, together with objects and advantages thereof, may best be understood with reference to the following description of the embodiments together with the accompanying drawings in which:
FIG. 1 is a schematic perspective view showing an air jet loom and a stop-mark inspection apparatus for the air jet loom according to a first embodiment of the present disclosure;
FIG. 2 is a side view showing major components of the stop-mark inspection apparatus for the air jet loom;
FIG. 3 is a schematic block diagram showing the stop-mark inspection apparatus for the air jet loom;
FIG. 4 is a diagram showing a photographed image of a woven fabric;
FIG. 5A is a chart in which each bar represents the normal pitch between threads, or the normal number of picks per inch, of the weft by the photographed image according to the first embodiment, and FIG. 5B is another chart in which each bar represents a ratio of the average pitch to the normal pitch between the threads of the weft by the photographed image according to the second embodiment;
FIG. 6 is a diagram showing a photographed image of a woven fabric according to a second embodiment of the present disclosure; and
FIG. 7A is a chart in which each bar represents the normal pitch between threads, or the normal number of picks per inch, of the weft by the photographed image according to the second embodiment, and FIG. 7B is another chart in which each bar represents a ratio of the average pitch to the normal pitch between the threads of the weft in each photographed image according to the second embodiment.

### DETAILED DESCRIPTION OF THE EMBODIMENTS

### [First embodiment]

A method of a stop-mark inspection for a loom and a stop-mark inspection apparatus for a loom according to a first embodiment of the present disclosure will be described with reference to the accompanying drawings. First, the loom according to the first embodiment will be described. The loom according to the first embodiment is an air jet loom.

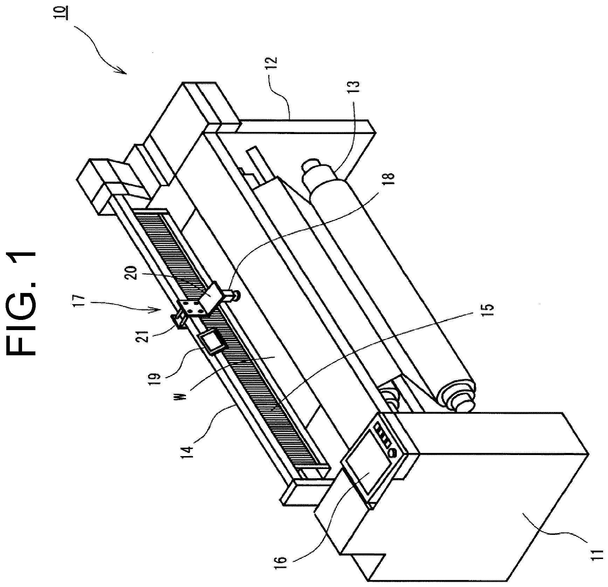

As shown in FIG. 1, an air jet loom 10 includes a pair of left and right side frames 11 and 12. The pair of the left and right side frames 11 and 12 is connected via a plurality of cross rails (not shown). The air jet loom 10 includes a warp beam (not shown) on which the warp is wound and a cloth roll 13 on which the woven fabric W is to be wound. The warp beam constitutes a part of a let-off apparatus for letting off the warp, and the cloth roll 13 constitutes a part of a take-up apparatus for taking up the woven fabric W.

A top rail 14 is provided at an upper portion of the air jet loom 10. Beneath the top rail 14, a reed 15 is provided to beat a weft that is inserted into the shed between raised and lowered threads of warp. On the left side frame 11 disposed at the left end of the air jet loom 10, a function panel 16 is provided to check an operation status of the air jet loom 10 and to operate the loom 10. The let-off apparatus including the warp beam, a weft insertion apparatus including a weft insertion nozzle, and a shedding apparatus including a heddle frame are not shown in FIG. 1.

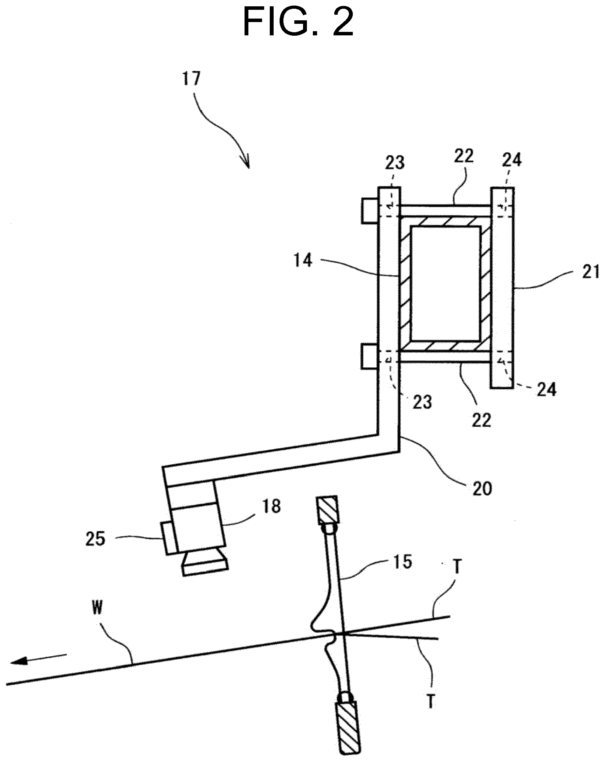

As shown in FIGs. 1 and 2, a stop-mark inspection apparatus 17 is attached to the top rail 14, according to the first embodiment. The stop-mark inspection apparatus 17 includes a camera 18 and a monitor 19 serving as a display. The camera 18 is fixed to one end of a support plate member 20 that has a bent shape similar to an L-shape. The other end of the support plate member 20 is attached to the top rail 14 by using a bracket 21 and a bolt 22.

A through hole 23 for inserting the bolt 22 is formed to the support plate member 20. The bracket 21 is a plate member and has a plurality of screw holes 24 into which the bolt 22 is to be screwed. The camera 18 is arranged in such a manner that its axis extends orthogonal to the woven fabric W in a state where the support plate member 20 is attached to the top rail 14. The monitor 19 is attached to the top rail 14 by using a fixing bracket (not shown) in the vicinity of the camera 18. An illumination light 25 is provided to the camera 18 and illuminates in the same direction as the axis of the camera 18. The illumination light 25 is capable of providing the illuminance necessary for the camera 18 to photograph even a dark-colored woven fabric W. The illuminance of the illumination light 25 is adjustable.

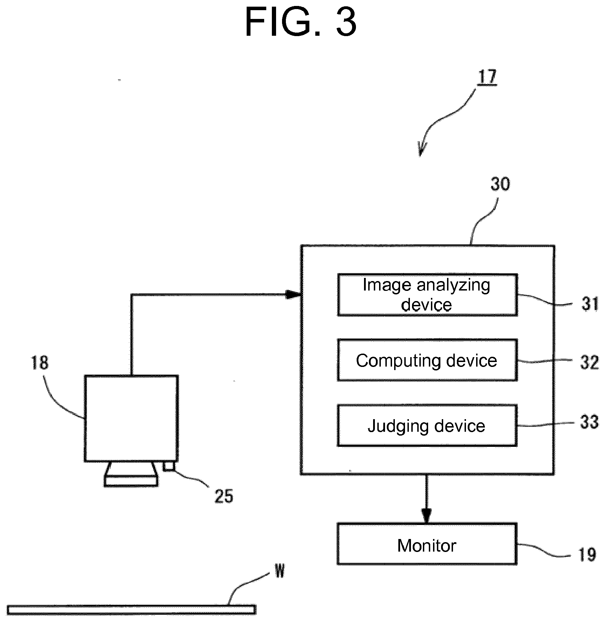

As shown in FIG. 3, the stop-mark inspection apparatus 17 includes a controller 30 that is connected to the camera 18 and the monitor 19. The controller 30 includes an image analyzing device 31, a computing device 32, and a judging device 33. The image analyzing device 31 analyzes a photographed image S of the woven fabric W captured by the camera 18. The computing device 32 calculates the normal pitch between the threads of the weft based on a result analyzed by the image analyzing device 31. The judging device 33 determines the presence or the absence of the stop mark by calculating a ratio of the average pitch to the normal pitch between the threads of the weft calculated by the computing device 32. The monitor 19 displays the normal pitch between the threads of the weft and a result determined by the judging device 33. The normal pitch between the threads of the weft and the ratio of the average pitch to the normal pitch between the threads of the weft will be described later.

Now, a method of a stop-mark inspection of the air jet loom 10 according to the first embodiment will be described below. According to the embodiment, the stop mark is inspected by using the woven fabric W that is woven in a trial run. More specifically, in a state after the air jet loom 10 under the trial run being stopped, resumed, and then stopped again, the woven fabric W is inspected for the stop mark. The woven fabric W may be inspected for the stop mark without stopping the loom operation.

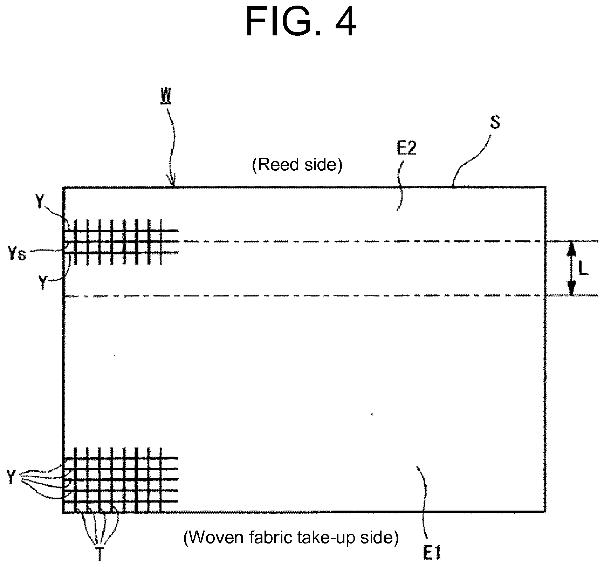

First, a position of the camera 18 in relation to the woven fabric W is adjusted, and then the woven fabric W is photographed with the camera 18. More specifically, as shown in FIG. 4, the camera 18 is positioned in such a manner that a photographing area of the camera 18 includes a weaving-resuming weft thread Ys for photographing the woven fabric W. The weaving-resuming weft thread Ys is a thread of the weft Y of the woven fabric W inserted between threads of warp T when weaving is resumed after the stop in operation of the air jet loom 10. According to the embodiment, the weaving-resuming weft thread Ys is located in the photographing area of the camera 18 at a position closer to the reed 15 than to the center between the end of the photographing area on the woven fabric take-up side and the end of the photographing area on the reed 15 side. According to the embodiment, the camera 18 photographs the woven fabric W in such a manner that the photographed image S includes 30 picks per inch of the weft Y

Then, the image analyzing device 31 performs an image analysis processing including a process to convert the photographed image S of the woven fabric W into pixels. The weft Y in the photographed image S become identifiable through the image analysis processing. The image analyzing device 31 outputs the pitches between all threads of the weft Y identified in the photographed image S.

After analysis processing of the photographed image S, the computing device 32 calculates a normal pitch P between threads, or a normal number of picks per inch, of the weft Y. The normal pitch P between the threads of the weft Y is calculated based on the pitches between threads of the weft Y in a first image zone E1. Specifically, the pitches between the threads of the weft Y included in the first image zone E1 are averaged, and then the averaged pitch is used as the normal pitch P between the threads of the weft Y. The first image zone E1 is defined as an image zone spaced from the weaving-resuming weft thread Ys by a pre-determined length L in a direction to the woven fabric take-up side (a front side). The first image zone E1 according to the first embodiment occupies two thirds of the entire area of the photographed image S and includes 20 picks per inch of the weft Y. The pitches between the threads of the weft Y in the first image zone E1 are output from the image analyzing device 31.

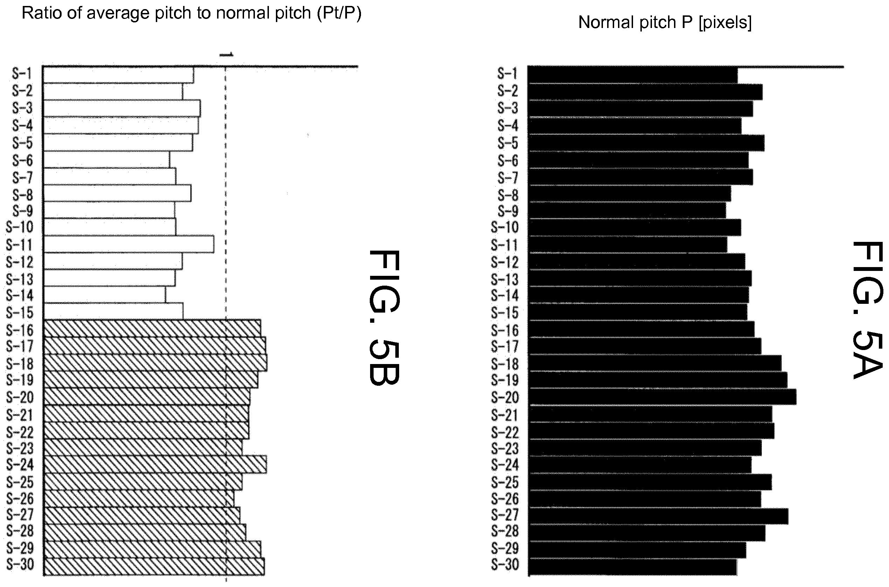

The chart in FIG. 5A shows the normal pitch P between the threads of the weft Y included in the first image zone E1 by every 30 photographed images (S-1 to S-30). The 30 photographed images S are captured 30 times, for example, by shifting a position on the woven fabric W in the weaving width direction.

The computing device 32 calculates an average pitch Pt between threads, or an average number of picks per inch, of the weft Y in a second image zone E2. The average pitch Pt is determined by calculating the average of pitches between threads of the weft Y in the second image zone E2. The second image zone E2 is defined as an image zone that extends between the weaving-resuming weft thread Ys and the end of the photographed image S on the reed 15 side (a rear side). The pitches between the threads of the weft Y in the second image zone E2 are output from the image analyzing device 31. The second image zone E2 includes the weaving-resuming weft thread Ys.

When weaving is resumed after the stop in operation of the air jet loom 10 by some cause, the stop mark tends to be formed. In other words, the stop mark is likely to be formed in the second image zone E2 of the photographed image S. A failure called a stop mark has three types: a heavy-filling bar having a narrower pitch between the threads of the weft Y than the normal pitch P, a light-filling bar having a broader pitch between the threads of the weft Y than the normal pitch P, and a wavy set mark formed by a dislocated weft in a thickness direction. The first embodiment of the present disclosure is directed to an inspection for the heavy-filling and light-filling bars. The computing device 32 determines a ratio (Pt/P) of the average pitch Pt between the threads of the weft Y in the second image zone E2 to the normal pitch P between the threads of the weft Y in the first image zone E1 calculated by the computing device 32. The chart in FIG. 5B shows the ratio (Pt/P) of the average pitch Pt between the threads of the weft Y in the second image zone E2 to the normal pitch P between the threads of the weft Y in the first image zone E1 by every 30 photographed images (S-1 to S-30).

The judging device 33 determines the presence or the absence of the stop mark (heavy-filling or light-filling bar) exists in the woven fabric W based on the ratio (Pt/P) of the average pitch Pt between the threads of the weft Y in the second image zone E2 to the normal pitch P between the threads of the weft Y in the first image zone E1 calculated by the computing device 32. When the second image zone E2 includes the heavy-filling bar, the ratio (Pt/P) is less than 1. When the second image zone E2 includes the light-filling bar, the ratio (Pt/P) exceeds 1. When the ratio (Pt/P) is equal to 1, the second image zone E2 includes neither the heavy-filling bar nor the light-filling bar. In the chart in FIG. 5B, photographed images S-1 to S-15 indicate the presence of the heavy-filling bar and photographed images S-16 to S-30 indicate the presence of the light-filling bar.

In this way, according to the first embodiment, the normal pitch P between the threads of the weft Y in the first image zone E1 and the average pitch Pt between the threads of the weft Y in the second image zone E2 are calculated by using a single-piece photographed image S, and the presence or the absence of the stop mark in the woven fabric W is determined based on the ratio (Pt/P) of the average pitch Pt to the normal pitch P. In other words, the presence or the absence of the stop mark in the woven fabric W is determined by comparing the average pitch Pt between the threads of the weft Y in the second image zone E2 that includes the weaving-resuming weft thread Ys with the normal pitch P between the threads of the weft Y in the first image zone E1. The air jet loom 10 is adjusted at relevant components based on the determined judgment results to prevent the stop mark from being formed even when the air jet loom 10 stops. The only thing an operator needs to do is to enter values related to the adjustment items in the function panel 16.

The method of the stop-mark inspection and the stop-mark inspection apparatus 17 for the air jet loom 10 according to the first embodiment offer following operational effects.
(1) The normal pitch P is calculated by using the first image zone E1 of the photographed image S, and the average pitch Pt is calculated by using the second image zone E2 that includes the weaving-resuming weft thread Ys. Then, the average pitch Pt is compared with the normal pitch P to determine the presence or the absence of the stop mark in the photographed image S. In this way, the normal pitch P and the average pitch Pt are calculated by using the photographed image S captured by one-time photographing, and the presence or the absence of the stop mark is determined in a high accuracy based on the calculated normal pitch P and the calculated average pitch Pt. This results in reduction in time required for the inspection to determine the presence or the absence of the stop mark.
(2) In photographing, the weaving-resuming weft thread Ys is located in the photographing area at a position spaced from the center of the photographing area in a direction to the reed 15, which extends the first image zone E1 used for calculating the normal pitch P between the threads of the weft Y, and thus, increases the number of picks of the weft Y used for calculating the normal pitch P. This reduces errors in calculating the normal pitch P between the threads of the weft Y and improves the identifying ratio of the stop mark in determining the presence or the absence of the stop mark based on the normal pitch P between the threads of the weft Y.
(3) The first image zone E1 occupies two thirds of the photographed image S on the woven fabric take-up side, which increases the number of picks of the weft Y used for calculating the normal pitch P and enhances the accuracy in calculating the normal pitch P between the threads of the weft Y. This further improves the identifying ratio of the stop mark in determining the presence or the absence of the stop mark based on the normal pitch P between the threads of the weft Y.
(4) The stop-mark inspection apparatus 17 includes the camera 18 that photographs the woven fabric W in such a manner that a photographing area of the camera 18 includes the weaving-resuming weft thread Ys, the computing device 32 that calculates the normal pitch P between the threads of the weft Y and the average pitch Pt between the threads of the weft Y, and the judging device 33 that determines the presence or the absence of the stop mark in the woven fabric W. This allows calculation of the normal pitch P by using the first image zone E1 of the photographed image S, calculation of the average pitch Pt by using the second image zone E2 that includes the weaving-resuming weft thread Ys, and then comparison between the average pitch Pt and the normal pitch P, for determining the presence or absence of the stop mark in the photographed image S.
(5) For inspecting the presence or the absence of the stop mark in the photographed image, the normal pitch P and the average pitch Pt are calculated by using the photographed image S of the woven fabric W according to the first embodiment, unlike the conventional art in which the normal pitch between the threads of the weft is pre-set and then the woven fabric is photographed for inspecting for the stop mark. As a result, the stop mark is detected in a high accuracy in the inspection according to the first embodiment, unlike the conventional art in which the normal pitch in an actual woven fabric may depart from the pre-set normal pitch.

### [Second embodiment]

Now, a method of a stop-mark inspection for a loom and a stop-mark inspection apparatus for a loom according to a second embodiment of the present disclosure will be described below. The second embodiment is different from the first embodiment in that a weaving-resuming weft thread is located in the center of a photographing area of a photographed image, but is the same as the first embodiment in the procedure of the method of the stop-mark inspection and in the configuration of the stop-mark inspection apparatus.

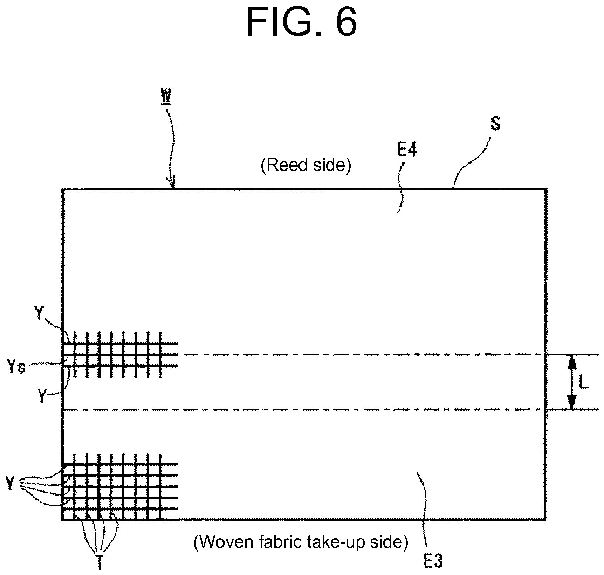

According to the second embodiment as shown in FIG. 6, a camera 18 is positioned in such a manner that a weaving-resuming weft thread Ys is included in the photographing area of the camera 18, more specifically, in the center of the photographing area of the camera 18. A normal pitch P between the threads, or the normal number of picks per inch, of the weft Y according to the second embodiment is calculated based on the pitches between threads of the weft Y in a first image zone E3. The pitches between threads of the weft Y included in the first image zone E3 are averaged, and then the averaged pitch is used as the normal pitch P. The first image zone E3 is defined as an image zone spaced from the weaving-resuming weft thread Ys by a pre-determined length L in a direction to the woven fabric take-up side (a front side).

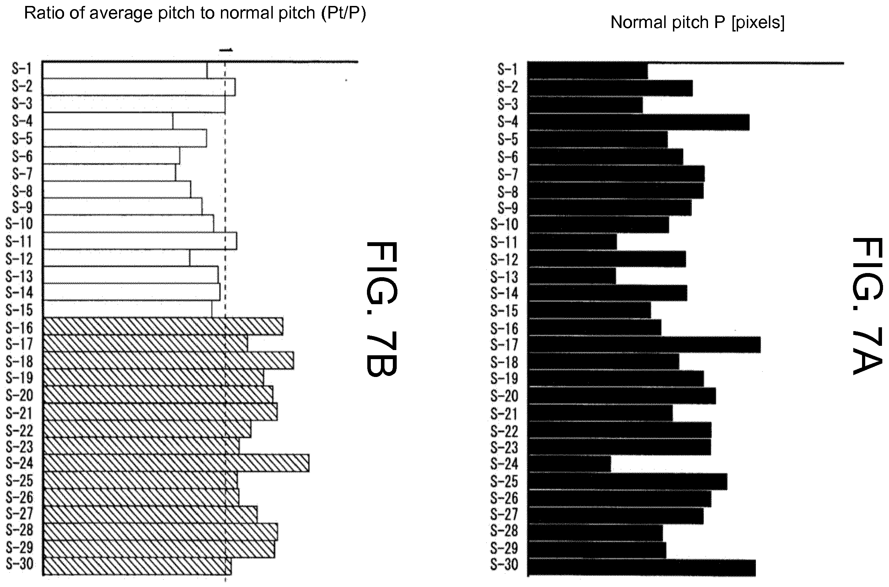

The first image zone E3 according to the second embodiment occupies a third of the entire area of a photographed image S and includes 10 picks per inch of the weft Y. The chart in FIG. 7A shows the normal pitch P between the threads of the weft Y included in the first image zone E3 by every 30 photographed images (S-1 to S-30). Because the first image zone E3 used for calculating the normal pitch P includes 10 picks per inch of the weft Y, the normal pitch P by each of the photographed image S varies more than those in the chart in FIG. 5A of the first embodiment.

A computing device 32 calculates an average pitch Pt between the threads, or an average number of picks per inch, of the weft Y in a second image zone E4 that extends between the weaving-resuming weft thread Ys and the end of the photographed image S on the reed 15 side (the rear side). The number of picks of the weft used for calculating the average pitch Pt between the threads of the weft Y in the second image zone E4 that includes the weaving-resuming weft thread Ys is 15 picks per inch. The second image zone E4 is defined as an image zone that extends between the weaving-resuming weft thread Ys and the end of the photographed image S on the reed 15 side (the rear side). The computing device 32 determines a ratio (Pt/P) of the average pitch Pt between the threads of the weft Y in the second image zone E4 to the normal pitch between the threads P of the weft Y in the first image zone E3 calculated by the computing device 32. The chart in FIG. 7B shows the ratio (Pt/P) of the average pitch Pt between the threads of the weft Y in the second image zone E4 to the normal pitch P between the threads of the weft Y in the first image zone E3 by every 30 photographed images (S-1 to S-30).

A judging device 33 determines the presence or the absence of the stop mark (heavy-filling or light-filling bar) in the woven fabric W based on the ratio (Pt/P) of the average pitch Pt between the threads of the weft Y in the second image zone E4 to the normal pitch P between the threads of the weft Y in the first image zone E3 calculated by the computing device 32. In other words, the presence or the absence of the stop mark in the photographed image S is determined by comparing the average pitch Pt with the normal pitch P. In the chart in FIG. 7B, photographed images S-1 to S-15 indicate the presence of the heavy-filling bar and photographed images S-16 to S-30 indicate the presence of the light-filling bar. Note that the bars representing the photographed images S-2 and S-11 shown in FIG. 7B exceed 1 that thus indicate the ratio (Pt/P) of the light-filling bar. However, S-2 and S-11 in the actual woven fabric exhibit the heavy-filling bars. This erroneous identification is caused by a difference between the number of picks of the weft Y in the first image zone E3 used for calculating the normal pitch P, that is 10 picks per inch, and the number of the weft Y in the second image zone E4 used for calculating the average pitch Pt, that is 15 picks per inch.

The second embodiment according to the present disclosure offers the same operational effects as those of (1), (4), and (5) of the first embodiment. The center of the photographing area corresponds to a position of the smallest distortion in a lens (not shown) used by the camera 18. Because of this, the distortion in the lens hardly affects the weaving-resuming weft thread Ys in the image analysis of the photographed image S. Thus, an erroneous identification caused by the distortion in the lens does not occur.

The embodiments disclosed herein are illustrative and not limited to the embodiments described above in every respect. The scope of the present disclosure is defined by the claims rather than the above description, and is intended to include any modifications equivalent in meaning and scope to the claims.

The first image zone used for calculating the normal pitch between the threads of the weft occupies two thirds of the entire photographed image according to the first embodiment and a third of the entire photographed image according to the second embodiment as described above. However, the scope of the present disclosure is not limited to the embodiments described above. The proportion of the first image zone used for calculating the normal pitch between the threads of the weft to the entire photographed image may be, for example, a half, other than two thirds or a third as described above.

In the above embodiments, the first image zone used for calculating the normal pitch between the threads of the weft is defined as a zone that extends between a position spaced from the weaving-resuming weft thread by the pre-determined length in the direction to the woven fabric take-up side (the front side) and the end of the photographed image on the woven fabric take-up side (the front side). However, the scope of the present disclosure is not limited to the embodiments described above. The first image zone used for calculating the normal pitch between the threads of the weft may be a zone between a position spaced from the weaving-resuming weft thread by the pre-determined length and a position before the end of the photographed image on the woven fabric take-up side (the front side). Likewise, the second image zone used for calculating the average pitch between the threads of the weft may be a zone between the weaving-resuming weft thread and a position before the end of the photographed image on the reed side, although the zone is described as an area between the weaving-resuming weft thread and the end of the photographed image on the reed side (the rear side) according to the embodiments above. The pre-determined length by which the position is spaced from the weaving-resuming weft thread may be changed to any appropriate length depending on the weaving conditions. Alternatively, the second image zone may be the entire area between the border of the first image zone used for calculating the normal pitch and the end of the photographed image on the reed side, or may be a part of the area that includes the weaving-resuming weft thread, at the least.

The camera in the stop-mark inspection apparatus is fixed to the air jet loom for photographing the woven fabric according to the embodiments described above. However, the scope of the present disclosure is not limited to the embodiments described above. For example, the stop-mark inspection apparatus may be a transportable type without being fixed to the air jet loom for photographing the woven fabric.

A method of a stop-mark inspection for a loom (10) includes photographing a woven fabric (W) in such a manner that a photographing area contains a weaving-resuming weft thread (Ys) that is a thread of the weft (Y) of the woven fabric (W) inserted when weaving is resumed after a stop in operation of the loom (10), computing a normal pitch (P) between threads of the weft (Y) in a first image zone (E1, E3) that is spaced from the weaving-resuming weft thread (Ys) by a pre-determined length (L) in a direction to a woven fabric take-up side in a photographed image (S, S1 to S30) of the woven fabric (W), and determining presence or absence of a stop mark in the woven fabric (W) by comparing a pitch (Pt) between threads of the weft (Y) in a second image zone (E2, E4) that contains the weaving-resuming weft thread (Ys) with the normal pitch (P) between the threads of the weft (Y).

## Claims

1. A method of a stop-mark inspection for a loom (10), the method **characterized by** comprising:
photographing a woven fabric (W) in such a manner that a photographing area includes a weaving-resuming weft thread (Ys) that is a thread of weft (Y) of the woven fabric (W) inserted when weaving is resumed after a stop in operation of the loom (10);
computing a normal pitch (P) between threads of the weft (Y) in a first image zone (E1, E3) that is spaced from the weaving-resuming weft thread (Ys) by a pre-determined length (L) in a direction to a woven fabric take-up side in a photographed image (S, S1 to S30) of the woven fabric (W); and
determining presence or absence of a stop mark in the woven fabric (W) by comparing a pitch (Pt) between threads of the weft (Y) in a second image zone (E2, E4) that contains the weaving-resuming weft thread (Ys) with the normal pitch (P) between the threads of the weft (Y).

2. The method of the stop-mark inspection according to claim 1, **characterized in that** the weaving-resuming weft thread (Ys) is located in the photographing area at a position spaced from a center of the photographing area in a direction to a reed (15).

3. The method of the stop-mark inspection according to claim 1 or 2, **characterized in that** the first image zone (E1, E3) occupies two thirds of the photographed image (S, S1 to S30) on the woven fabric take-up side.

4. A stop-mark inspection apparatus (17) for a loom (10), the apparatus (17) **characterized by** comprising:
a camera (18) photographing a woven fabric (W) in such a manner that a photographing area includes a weaving-resuming weft thread (Ys) that is a thread of weft (Y) of the woven fabric (W) inserted when weaving is resumed after a stop in operation of the loom (10);
a computing device (32) computing a normal pitch (P) between threads of the weft (Y) in a first image zone (E1, E3) that is spaced from the weaving-resuming weft thread (Ys) by a pre-determined length (L) in a direction to a woven fabric take-up side in a photographed image (S, S1 to S30) of the woven fabric (W); and
a judging device (33) determining presence or absence of a stop mark in the woven fabric (W) by comparing a pitch (Pt) between threads of the weft (Y) in a second image zone (E2, E4) that contains the weaving-resuming weft thread (Ys) with the normal pitch (P) between the threads of the weft (Y).

5. The stop-mark inspection apparatus (17) according to claim 4, **characterized in that** the camera (18) photographs the woven fabric (W) in such a manner that the weaving-resuming weft thread (Ys) is located in the photographing area at a position spaced from a center of the photographing area in a direction to a reed (15).

6. The stop-mark inspection apparatus (17) according to claim 4 or 5, **characterized in that** the first image zone (E1, E3) occupies two thirds of the photographed image (S, S1 to S30) on the woven fabric take-up side.
